# FASCICULE DE BREVET EUROPEEN

(11) **EP 3 283 316 B1**
(45) Date de publication et mention de la délivrance du brevet: **27.02.2019**
(21) Numéro de dépôt: 16722271.0
(22) Date de dépôt: 08.04.2016
(51) Int. Cl.: B60K 11/04, F16B 5/06, F16B 21/04, F28F 9/00, F16B 5/12, F16B 21/07

(54) **FIXATION DE RADIATEUR AUTO-AJUSTABLE**
BEFESTIGUNG EINES SELBSTJUSTIERENDEN HEIZKÖRPER
FASTENING OF SELF-ADJUSTABLE RADIATOR

(30) Priorité: 13.04.2015 FR 1553174
(43) Date de publication de la demande: 21.02.2018
(73) Titulaire: A. Raymond et Cie, 38000 Grenoble (FR)
(72) Inventeur: LAMOUREUX, David, 38100 Grenoble (FR)
(74) Mandataire: Prugneau, Philippe
(86) Numéro de dépôt international: PCT/FR2016/000072
(87) Numéro de publication internationale: WO 2016/166427

(56) Documents cités:
- EP-A1- 1 143 156
- WO-A1-2014/203906
- US-A- 5 078 224
- US-A- 5 735 511

## Description

### Domaine technique

L'invention concerne un dispositif de fixation pour véhicule automobile.

L'invention concerne plus particulièrement un dispositif pour fixer un dispositif de refroidissement, comme un radiateur, sur un support, comme la traverse de la face avant d'un véhicule automobile, du type comprenant une coulisse en forme de tige avec une tête et un pied, et un support formant embase destiné à être fixé à ladite traverse, ledit support comportant un alésage annulaire dans lequel ladite coulisse en forme de tige peut être enfoncée axialement face à un point de fixation pour le pied de la tige qui est prévu dans le radiateur.

### Technique antérieure

Dans un véhicule, le radiateur de refroidissement du moteur du véhicule automobile est situé généralement dans la partie avant du véhicule. Il est monté sur des traverses ou poutres par l'intermédiaire de dispositifs de fixation. Le radiateur peut par exemple reposer sur une traverse inférieure par l'intermédiaire de deux fixations et être fixé à une traverse supérieure par deux autres fixations.

La présente invention concerne plus particulièrement les fixations reliant le radiateur à une traverse horizontale supérieure.

De façon générale, des éléments sont fixés sur la façade avant technique d'un véhicule par des écrous ou par des goujons sertis pour des éléments à haute tenue mécanique, ou par des pattes de fixation pour des éléments à faible tenue mécanique. Afin de monter des éléments sur la façade avant de façon plus simple tout en en réduisant les efforts de montage tel que le vissage, d'autres modes de fixation ont été développés. Des dispositifs de fixation d'un radiateur de véhicule automobile sont par exemple décrits dans les documents EP0738838, WO 2006/026591, WO 2012/020185.

Le document FR2807480 décrit un dispositif de fixation d'un radiateur de véhicule selon le préambule de la revendication 1.

### Exposé de l'invention

L'invention a pour objet un dispositif de fixation d'un radiateur de véhicule automobile sur une traverse du véhicule, comprenant une coulisse en forme de tige avec une tête et un pied, et un support formant embase destiné à être fixé à la traverse, le support comportant un alésage annulaire dans lequel la coulisse en forme de tige peut être enfoncée axialement face à un point de fixation pour le pied de la tige qui est prévu dans le radiateur, caractérisé en ce que la tige présente sur sa longueur au moins une zone de stries qui forment des crans et au moins une zone non striée comprenant un doigt flexible pour faire face à au moins une bande longitudinale striée formant des crans sur une face intérieure de l'alésage du support, la face intérieure de l'alésage du support comprenant en outre au moins une bande longitudinale lisse qui s'étend axialement et adjacente à au moins la bande longitudinale striée, de telle manière que dans une première position angulaire du support par rapport à la tige, la tige peut être enfoncée axialement par cran dans l'alésage du support lorsque le doigt passe successivement d'une strie à une autre de la bande longitudinale striée pour déplacer le pied de la tige jusqu'au point de fixation dans le radiateur où le pied est bloqué axialement et en rotation, et en ce que le support comprend des pattes flexibles et un système de fixation du type à baïonnette comprenant des ailettes radiales inclinées pour se fixer dans un trou à oreilles ménagé dans la traverse, de telle manière que par une rotation axiale du support de la première position angulaire vers une seconde position angulaire, les pattes flexibles se retrouvent dans une position avancée dans le trou à oreilles, et les ailettes radiales inclinées se retrouvent en contact avec la face inférieure de la traverse de sorte à verrouiller respectivement en rotation et en translation axiale le support par rapport à la traverse et en ce que les ailettes inclinées provoquent simultanément au verrouillage en rotation et en translation, un rehaussement axial de la tige dans le support de manière à ce que dans la seconde position angulaire la tige s'étende de façon auto-ajustée dans le support entre la traverse et le point de fixation du radiateur.

Le dispositif de fixation ajustable selon l'invention peut présenter les particularités suivantes :
- le support peut comporter des moyens de préhension servant au mouvement de rotation du support ;
- le pied de coulisse peut avoir la forme d'un sabot ;
- la tige de coulisse peut comprendre une section fusible à proximité du pied de coulisse ;
- le support peut comprendre des moyens de verrouillage à la traverse ;
- les moyens de verrouillage du support à la traverse peuvent être actionnés par un mouvement de rotation du support ;
- les moyens de verrouillage du support à la traverse peuvent être actionnés par un mouvement de rotation du type 1/4 de tour du support par rapport à la coulisse ;
- il peut comprendre un système de blocage en translation axiale de la coulisse en position de pré-montage dans le support quand le support est dans la première position angulaire ;
- le système de blocage en translation axiale de la coulisse, en position de pré-montage dans le support, peut être une patte rétractable radialement agencée sous la tête de la coulisse et qui se bloque sur un rebord du support, la position de pré-montage étant une position compacte avec la coulisse enfoncée au maximum dans le support et le réglage du déplacement du pied de la tige jusqu'au point de fixation se faisant en poussant la tête de la tige dans le support ;
- le système de blocage en translation axiale de la coulisse, en position de pré-montage dans le support, peut être un clip ressort type raccord agencé sur la tête du support, la position de pré-montage étant une position déployée avec la coulisse sortie au maximum du support et le réglage du déplacement du pied de la tige jusqu'au point de fixation se faisant en appuyant sur le clip à ressort pour autoriser un enfoncement de la tige dans le support;
- la coulisse et le support peuvent être en plastique.

Avec cet agencement selon l'invention, la longueur de la tige de la coulisse, nécessaire à la fixation du pied de la coulisse au radiateur et du support à la traverse est auto-ajustable en fonction de la distance de séparation entre le radiateur et la traverse et cela avant l'actionnement en rotation axiale du support par rapport à la coulisse permettant la fixation du support à la traverse. Lors de la mise en rotation du support par rapport à la coulisse, il se produit un blocage mécanique positif par une mise en contact de deux surfaces en opposition en deux endroits distincts, à savoir entre les crans de la tige et les crans du support. Il en résulte une excellente tenue dans le temps de la position axiale de la tige de la coulisse dans l'embase du support sans risque d'un glissement relatif indépendamment de la matière avec laquelle est réalisée la tige ou l'embase.

Avec cet agencement, après avoir ajusté la coulisse entre la traverse et le radiateur, par un mouvement de rotation du support par rapport à la tige, la tige se retrouve bloquée dans le support, et le support se trouve bloqué axialement et verrouillé en rotation à la traverse.

Avec le dispositif selon l'invention, les constructeurs automobiles ont à leur disposition un dispositif de fixation de radiateur à une traverse qui est ajustable à la distance entre les éléments à fixer et facile d'utilisation nécessitant peu d'effort de montage.

### Présentation sommaire des dessins

La présente invention sera mieux comprise et d'autres avantages apparaîtront à la lecture de la description qui suit et des dessins annexés dans lesquels :
- la figure 1 illustre très schématiquement un radiateur d'un véhicule automobile destiné à être fixé à une traverse supérieure d'une face avant d'un véhicule par un dispositif de fixation selon l'invention ;
- la figure 2 est une vue en perspective d'un premier mode de réalisation du dispositif de fixation en position de pré-montage ;
- la figure 3 est une vue en éclatée des éléments constitutifs du dispositif de fixation montré sur la figure 2 ;
- la figure 4 est une vue en coupe axiale du support du dispositif de fixation des figures 2 et 3 ;
- la figure 5 illustre un trou à oreilles d'une traverse pour la fixation du dispositif de fixation selon l'invention ;
- la figure 6 est une vue de profil du dispositif de fixation avec le support dans une première position angulaire, introduit à travers une traverse et destiné à fixer un radiateur à la traverse ;
- la figure 7 est une vue en coupe axiale du dispositif de fixation de la figure 6 ;
- la figure 8 est une vue de profil du dispositif de fixation, ajusté pour fixer un radiateur à une traverse et avec le support dans la première position angulaire par rapport à la tige ;
- la figure 9 est une vue en coupe axiale du dispositif de fixation de la figure 8 ;
- la figure 10 est une vue en perspective du dispositif de fixation ajusté pour fixer un radiateur à une traverse avec le support dans une seconde position angulaire par rapport à la tige ;
- la figure 11 est une vue en perspective de dessous du dispositif de fixation pour la fixation d'un radiateur à une traverse et dans laquelle le support est dans une seconde position angulaire par rapport à la tige ;
- la figure 12 est une vue en perspective d'un second mode de réalisation du dispositif de fixation en position de pré-montage ;
- la figure 13 est une vue en éclatée des éléments constitutifs du dispositif de fixation montré sur la figure 12;
- la figure 14 est une vue en perspective du dispositif de fixation de la figure 12 en position ajustée par rapport au radiateur et à la traverse et fixé à la traverse ;

### Description d'un mode de réalisation

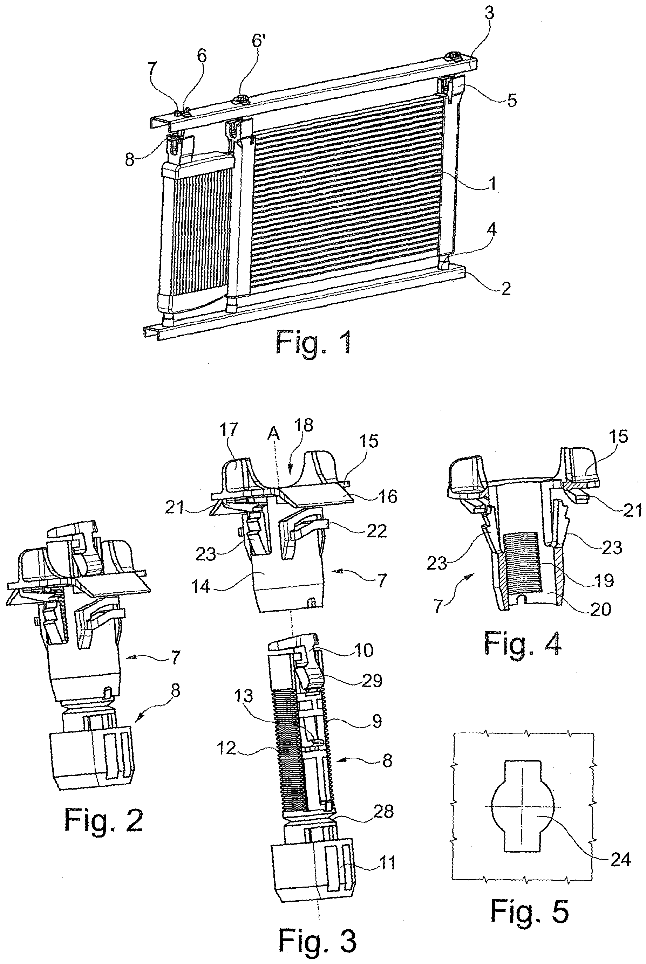

La figure 1 illustre un dispositif de refroidissement d'un véhicule automobile, tel qu'un radiateur 1, destiné à être fixé sur des traverses horizontales 2, 3 d'une face avant d'un véhicule. Ici, le radiateur 1 repose sur une traverse 2 inférieure par l'intermédiaire de plots 4 de maintien. Le radiateur 1 est fixé à une traverse 3 supérieure par un point de fixation 5, ici sous forme de silentbloc en forme de U agencé sur la structure du radiateur 1, par l'intermédiaire d'un dispositif de fixation 6 selon l'invention. De façon générale, un dispositif de fixation 6, 6' selon l'invention comprend un support traversant ici la traverse 3 supérieure et une coulisse mobile dans le support qui va venir se loger dans le point de fixation 5 du radiateur 1.

Sur la figure 2 est montré un dispositif de fixation 6 comprenant un support 7 et une coulisse 8 selon un premier mode de réalisation de l'invention. Ici, l'élément de fixation 6 est dans une position de pré-montage, c'est-à-dire prêt à être utilisé pour fixer le radiateur 1 sur la traverse 3.

Sur la figure 3, on a représenté en éclatée le dispositif de fixation 6 selon l'invention, illustré avec un axe A.

Sur cette figure sont visibles de façon séparée le support 7 et la coulisse 8 formant le dispositif de fixation 6.

La coulisse 8 présente une tige 9 avec une tête 10 et un pied 11 qui a ici la forme d'un sabot de maintien avec une section plate.

La tête 10 de coulisse se présente ici sous la forme d'un plot en forme de disque basculant avec une patte 29 s'étendant perpendiculairement sous le disque qui est rétractable radialement lorsque l'on bascule le disque. Avec cet agencement, et dans ce mode de réalisation, la patte 29 sert de moyen de blocage de la coulisse 8 en position de pré-montage dans le support 7, comme expliqué plus loin.

La tige 9 de la coulisse 8 s'étend suivant une direction axiale A. Elle a la forme d'une portion verticale de cylindre et présente sur sa longueur au moins une zone de stries ou gorges jointives qui forment des crans 12, ici dans l'exemple deux zones de stries sont diamétralement opposées, avec deux zones restant non striées.

Sur l'une ou l'autre des zones non striées de la tige 9, il peut être prévu un doigt 13 flexible formant un cran de réglage.

La tige 9 de la coulisse 8 présente une section 28 fusible à proximité du pied 11. En cas de choc sur la face avant du véhicule ou lors de la nécessité de changer le radiateur 1, la coulisse 8 peut se casser au niveau de cette section 28 pour libérer rapidement le radiateur 1 de la traverse 3.

Le support 7 du dispositif de fixation 6 forme une embase 14 essentiellement cylindrique constituant un corps de support surplombé par une tête 15 de support 7. L'embase 14 est destinée à traverser axialement la traverse 3.

La tête 15 de support 7 présente ici deux rebords 16 s'étendant radialement et diamétralement opposés, par exemple sous forme de parapluie et sont destinés à reposer sur la face supérieure de la traverse 3. La tête 15 de support 7 comporte aussi des moyens de préhension 17, ici sous forme de papillons, permettant de tenir le dispositif de fixation 6 mais aussi de le manoeuvrer manuellement en rotation avec deux doigts.

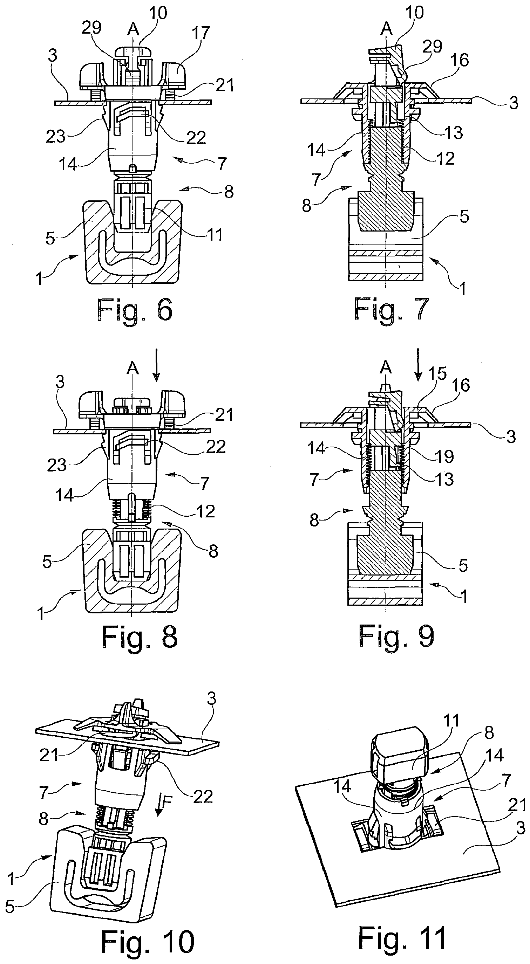

L'embase 14 comporte un alésage 18 annulaire axial dans lequel la tige 9 de la coulisse 8 peut se déplacer axialement lorsque le support 7 est dans une première position angulaire par rapport à la tige 9. Cet alésage 18 comporte sur sa face intérieure et du coté opposé à la tête 15 de support 7, au moins une zone longitudinale de stries 19 s'étendant selon la direction A, comme visible sur la figure 4, et formant des crans. Ici sont présentent deux bandes striées (visibles sur figure 7) et entre ces deux bandes striées sont présentes deux autres bandes lisses 20. L'embase 14 sert aussi de verrou pour bloquer ou verrouiller en position axiale la tige 9 de la coulisse 8.

Sont encore visibles sur les figures 2 à 4 sous la tête 15 de support 7, des pattes 21 flexibles s'étendant radialement et servant de système de verrouillage lors de la rotation du support 7 dans la traverse 3 par rapport à la coulisse 8.

L'embase 14 est pourvue d'ailettes radiales 22 pour former un système de fixation du type à baïonnette adapté pour une fixation du support 7 dans un trou à oreilles 24 de la traverse 3 comme celui illustré sur la figure 5.

L'embase 14 peut présenter des pattes 23 flexibles optionnelles s'étendant vers l'extérieur et axialement en direction de la tête 15 de support 7 pour venir en appui élastique sur le bord du trou à oreilles 24 pour maintenir en position axiale le support 7 à la traverse 3.

Pour un pré-montage du dispositif de fixation 6, la tête 10 de coulisse 8 est insérée dans l'alésage 18 de l'embase 14 en direction de la tête 15 de support 7, de telle manière que les crans 12 de la tige 9 de la coulisse 8 soient face aux zones lisses 20 de la surface intérieure de l'embase 14, correspondant à une première position angulaire du support 7 par rapport à la tige 9, et jusqu'à ce que la patte 29 rétractable de la tête 10 de coulisse 8 s'étende radialement sur le rebord de la tête 15 de support 7 et / ou que le pied 11 de coulisse vienne en butée avec l'embase 14.

Les différentes étapes de montage d'un dispositif de fixation 6 pour fixer le radiateur 1 à la traverse 3 supérieure sont maintenant décrites. Le dispositif de fixation 6 est inséré axialement dans le trou à oreilles 24 de la traverse 3 jusqu'à ce que les rebords 16 du support 7 viennent en contact avec la face supérieure de la traverse 3 comme visible sur les figures 6 et 7.

Si le dispositif de fixation 6 est muni de pattes 23 flexibles optionnelles, après le passage de l'embase 14 à travers le trou à oreilles 24, les pattes 23 passent d'une position rétractée à une position avancée en appui élastique en dessous de la traverse 3, de sorte que le support 7 se retrouve bloqué en position axiale par rapport à la traverse 3.

Les figures 8 et 9 présentent la tige 9 et le support 7 du dispositif de fixation 6 selon l'invention dans la première position angulaire de sorte que la coulisse 8 en forme de tige 9 peut être enfoncée dans le support 7 jusqu'à ce qu'elle vienne se loger de manière ajustée dans le point de fixation 5 du radiateur 1.

Pour cela, on appuie sur le disque de la tête 10 de la coulisse 8, la patte 29 rétractable s'efface de sorte que la coulisse 8 en forme de tige s'enfonce dans le support. Le doigt 13 passant successivement axialement d'une strie 19 à une autre strie 19 de l'alésage 18, la tige s'enfonce par crans successifs dans l'alésage 18 du support 7 jusqu'à ce que le pied 11 de la coulisse 8 se retrouve logé dans le point de fixation 5 et bloqué de manière ajustée en position axiale entre la traverse 3 et le point de fixation 5 du radiateur 1. Dans cette position, le pied 11 de la coulisse 8 se retrouve aussi bloqué en rotation dans le point de fixation 5 du radiateur. Ici le sabot est représenté en appui sur la partie élastomère du silentbloc et logé dans la forme en U du Silentbloc.

La position de la coulisse 8 se trouvant maintenant ajustée entre la traverse 3 et le radiateur 1, la tige 9 bloquée en position axiale et le pied 11 bloqué en rotation, le support 7 peut être actionné en rotation à l'aide des moyens de préhension 17 pour occuper une seconde position angulaire par rapport à la tige 9 de la coulisse 8. Dans cette seconde position angulaire, le support 7 est alors totalement bloqué en rotation de sorte que le radiateur 1 se retrouve fixé à la traverse 3.

Dans les figures 10 et 11, le support 7 a été tourné de ¼ de tour par rapport aux figures 8 et 9, se trouvant ainsi dans la seconde position angulaire par rapport à la tige 9.

Lors de la rotation du support 7 par rapport à la tige 9 immobile, les crans de la tige se sont logés dans les crans 19 du support 7. Simultanément à ce mouvement de rotation, des pattes 21 flexibles se retrouvent dans une position avancée dans le trou à oreilles 24 et les ailettes 22 formant le système de fixation du type à baïonnette se retrouvent en contact avec la face inférieure de la traverse 3 de sorte à verrouiller respectivement en rotation et en translation axiale le support 7 par rapport à la traverse 3. Comme les ailettes 22 sont inclinées, elles provoquent une rehausse axiale de la tige 9 dans le support 7, c'est-à-dire ici que la tige 9 se déplace légèrement axialement selon la flèche F (de 1 à 2 millimètres) vers le radiateur 1 afin d'assurer une contrainte de fixation au verrouillage. Simultanément à ce déplacement axial de la tige 9, les pattes 21 flexibles s'écrasent sur le support 7 avant de se retrouver en position avancée dans le trou à oreilles 24. Le blocage mécanique positif est obtenu par l'inclinaison des ailettes 22 et des pattes 21 flexibles, provoquant un mouvement axial de l'ensemble support-coulisse vers le bas afin d'assurer la contrainte de fixation sur l'ensemble radiateur.

Dans ce mode de réalisation, la position de pré-montage est une position compacte avec la coulisse 8 qui est enfoncée au maximum dans le support 7. Quand le support 7 est fixé à la traverse 3, la coulisse 8 est réglée en hauteur pour que le pied 11 de la coulisse 8 soit au fond du profil en U du radiateur 1 (point de fixation) et ce réglage se fait en poussant la tête 15 de la coulisse 8 dans le support 7 de façon à déployer la coulisse 8 à l'extérieur du support 7. Quand ce réglage est terminé, on actionne la rotation axiale du support 7, ici de 1/4 de tour, pour obtenir la rehausse axiale et le blocage axial de la tige 9 dans le support 7.

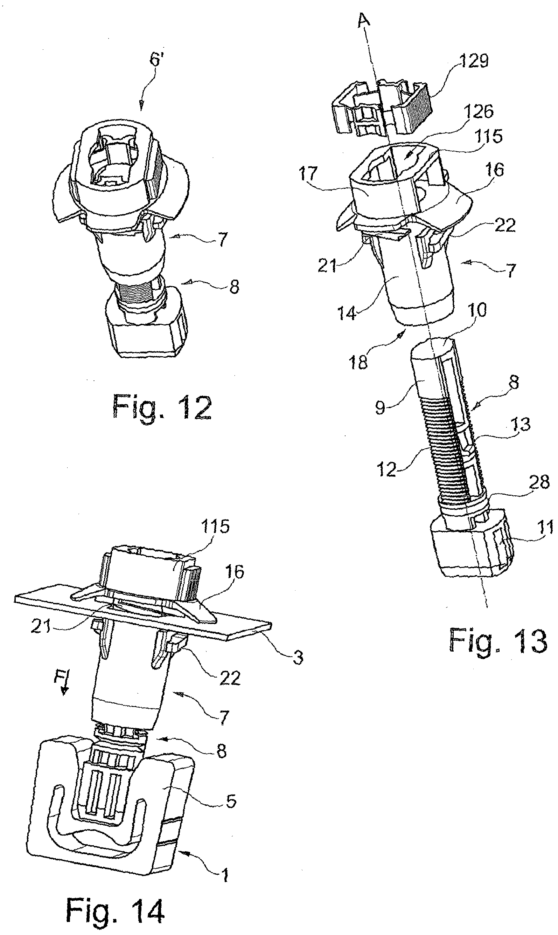

Sur la figure 12 est montré un dispositif de fixation 6' comprenant un support 7 et une coulisse 8 selon un second mode de réalisation de l'invention. Ici, l'élément de fixation 6' est dans une position de pré-montage, c'est-à-dire le support 7 est dans la première position angulaire par rapport à la tige 9, et est prêt à être utilisé pour fixer le radiateur 1 sur la traverse 3. Le dispositif de fixation 6' diffère du dispositif de fixation 6 par le moyen de blocage de la coulisse 8 pré-montée dans le support 7.

Sur la figure 13, on a représenté en éclatée le dispositif de fixation 6' selon l'invention.

Dans ce mode de réalisation, c'est la tête 15 de support 7 qui est agencée pour maintenir la coulisse 8 pré-montée au support 7. Dans un alésage 126 annulaire axial de la tête 15 de support 7 est logé un clip ressort 129 entre deux lumières qui bloque la tête 10 de coulisse 8 lorsque la coulisse 8 est en position de pré-montage dans le support 7.

Le montage du dispositif de fixation 6' pour fixer le radiateur 1 à la traverse 3 diffère du dispositif de fixation 6 en ce que la coulisse 8 peut être enfoncée dans l'alésage du support 7 à partir du moment où un opérateur appuie simultanément sur le clip à ressort 129 et la tête 10 de coulisse 8.

La position de pré-montage est dans ce mode de réalisation une position déployée, la coulisse 8 étant sortie au maximum du support 7 pour que le pied 11 de la coulisse soit enfoncé au fond du profil en U du radiateur 1 (point de fixation). Le réglage se fait en appuyant sur le clip ressort 129 pour autoriser un enfoncement de la coulisse 8 dans le support 7 (la coulisse 8 remonte dans le support 7) ce qui permet alors une mise en contact de l'embase du support avec la traverse 3.

Quand ce réglage est terminé, on actionne la rotation axiale du support 7, ici de 1/4 de tour, pour obtenir la rehausse axiale et le blocage axial de la tige 9 dans le support 7.

Il est entendu que les différents éléments des dispositifs de fixation 6, 6' selon l'invention peuvent être réalisés par moulage de matière plastique et que donc de tels dispositifs de fixation peuvent être fabriqués à faible coût.

Ces éléments pourraient aussi être fabriqués par addition de matière dans une imprimante 3D si par exemple il s'agissait d'une fabrication en petites séries.

## Revendications

1. Dispositif de fixation (6, 6') d'un radiateur (1) de véhicule automobile sur une traverse (3) du véhicule, comprenant une coulisse (8) en forme de tige (9) avec une tête (10) et un pied (11), et un support (7) formant embase (14) destiné à être fixé à ladite traverse (3), ledit support (7) comportant un alésage (18) annulaire dans lequel ladite coulisse (8) en forme de tige (9) peut être enfoncée axialement face à un point de fixation pour ledit pied (11) de ladite tige (9) qui est prévu dans ledit radiateur (1), **caractérisé en ce que** ladite tige (9) présente sur sa longueur au moins une zone de stries qui forment des crans (12) et au moins une zone non striées comprenant un doigt (13) flexible pour faire face à au moins une bande longitudinale striée (19) formant des crans sur une face intérieure dudit alésage (18) dudit support (7), ladite face intérieure dudit alésage (18) dudit support (7) comprenant en outre au moins une bande longitudinale lisse qui s'étend axialement et adjacente à au moins ladite bande longitudinale striée (19), de telle manière que dans une première position angulaire dudit support (7) par rapport à ladite tige (9), ladite tige (9) peut être enfoncée axialement par cran dans ledit alésage (18) dudit support (7) lorsque ledit doigt (13) passe successivement d'une strie à une autre de ladite bande longitudinale striée (19) pour déplacer ledit pied (11) de ladite tige (9) jusqu'audit point de fixation dans ledit radiateur (1) où ledit pied (11) est bloqué axialement et en rotation, et **en ce que** ledit support (7) comprend des pattes (21) flexibles et un système de fixation du type à baïonnette comprenant des ailettes (22) radiales inclinées pour se fixer dans un trou à oreilles ménagé dans ladite traverse (3), de telle manière que par une rotation axiale dudit support (7) de ladite première position angulaire vers une seconde position angulaire, lesdites pattes (21) flexibles se retrouvent dans une position avancée dans ledit trou à oreilles, et lesdites ailettes (22) radiales inclinées se retrouvent en contact avec la face inférieure de ladite traverse (3) de sorte à verrouiller respectivement en rotation et en translation axiale ledit support (7) par rapport à ladite traverse (3) et **en ce que** lesdites ailettes (22) inclinées provoquent simultanément audit verrouillage en rotation et en translation, un rehaussement axial de ladite tige (9) dans ledit support (7) de manière à ce que dans ladite seconde position angulaire ladite tige (9) s'étende de façon auto-ajustée dans ledit support (7) entre ladite traverse (3) et ledit point de fixation dudit radiateur (1).

2. Dispositif de fixation (6, 6') selon la revendication 1, **caractérisé en ce que** ledit support (7) comporte des moyens de préhension (17) servant au mouvement de rotation dudit support (7).

3. Dispositif de fixation (6, 6') selon l'une des revendications précédentes, **caractérisé en ce que** ledit pied (11) de coulisse (8) a la forme d'un sabot.

4. Dispositif de fixation (6, 6') selon l'une des revendications précédentes, **caractérisé en ce que** ladite tige (9) de ladite coulisse (8) comprend une section (28) fusible à proximité dudit pied (11) de ladite coulisse (8).

5. Dispositif de fixation (6, 6') selon l'une des revendications précédentes, **caractérisé en ce que** ledit support (7) comprend des moyens de verrouillage à ladite traverse (3).

6. Dispositif de fixation (6, 6') selon la revendication 5, **caractérisé en ce que** lesdits moyens de verrouillage dudit support (7) à ladite traverse (3) sont actionnables par un mouvement de rotation dudit support (7).

7. Dispositif de fixation (6, 6') selon l'une des revendications 5 ou 6, **caractérisé en ce que** lesdits moyens de verrouillage dudit support (7) à ladite traverse (3) sont actionnables par un mouvement de rotation du type 1/4 de tour dudit support (7) par rapport à ladite coulisse (8).

8. Dispositif de fixation (6, 6') selon l'une des revendications précédentes, **caractérisé en ce qu'**il comprend un système de blocage en translation axiale de ladite coulisse (8) en position de pré-montage dans ledit support(7) quand ledit support (7) est dans ladite première position angulaire.

9. Dispositif de fixation (6) selon la revendication 8, **caractérisé en ce que** ledit système de blocage en translation axiale de ladite coulisse (8), en position de pré-montage dans ledit support (7) est une patte (29) rétractable radialement agencée sous ladite tête (10) de ladite coulisse (8) et qui se bloque sur un rebord dudit support (7), **en ce que** la position de pré-montage est une position compacte avec ladite coulisse (8) enfoncée au maximum dans ledit support (7) et **en ce que** le réglage du déplacement dudit pied (11) de ladite tige (9) jusqu'au point de fixation se fait en poussant ladite tête (10) de ladite tige (9) dans ledit support (7).

10. Dispositif de fixation (6') selon la revendication 8, **caractérisé en ce que** ledit système de blocage en translation axiale de ladite coulisse (8) en position de pré-montage dans ledit support(7) est un clip à ressort (129) agencé sur ladite tête (115) dudit support(7), **en ce que** la position de pré-montage est une position déployée avec ladite coulisse (8) sortie au maximum dudit support (7) et **en ce que** le réglage du déplacement dudit pied (11) de ladite tige (9) jusqu'au point de fixation se fait en appuyant sur ledit clip à ressort (129) pour autoriser un enfoncement de ladite tige (9) dans ledit support (7).

11. Dispositif de fixation (6, 6') selon l'une des revendications précédentes, **caractérisé en ce que** ladite coulisse (8) et ledit support (7) sont en plastique.

## Patentansprüche

1. Befestigungsvorrichtung (6, 6') eines Heizkörpers (1) eines Kraftfahrzeugs an einem Querträger (3) des Fahrzeugs, umfassend einen Schieber (8) in Form einer Stange (9) mit einem Kopf (10) und einem Fuß (11) und eine Stütze (7), die eine Basis (14) bildet, die dazu bestimmt ist, an dem Querträger (3) befestigt zu werden, wobei die Stütze (7) eine ringförmige Bohrung (18) aufweist, in die der Schieber (8) in Form einer Stange (9) axial gegenüber einem Befestigungspunkt für den Fuß (11) der Stange (9) eingetrieben werden kann, der in dem Heizkörper (1) vorgesehen ist, **dadurch gekennzeichnet, dass** die Stange (9) auf ihrer Länge mindestens einen Bereich mit Rillen, die Kerben (12) bilden, und mindestens einen nichtgerillten Bereich aufweist, der einen flexiblen Finger (13) aufweist, um mindestens einem gerillten Längsband (19) zugewandt zu sein, das Kerben an einer Innenfläche der Bohrung (18) der Stütze (7) bildet, wobei die Innenfläche der Bohrung (18) der Stütze (7) ferner mindestens ein glattes Längsband aufweist, das sich axial erstreckt und an mindestens ein gerilltes Längsband (19) angrenzend ist, derart, dass die Stange (9) in einer ersten Winkelposition der Stütze (7) gegenüber der Stange (9) axial pro Kerbe in die Bohrung (18) der Stütze (7) eingetrieben werden kann, wenn der Finger (13) nacheinander von einer Rille in die andere des gerillten Längsbandes (19) übergeht, um den Fuß (11) der Stange (9) bis zu dem Befestigungspunkt in dem Heizkörper (1) zu verschieben, wo der Fuß (11) axial und in Drehung blockiert wird, und dadurch, dass die Stütze (7) flexible Laschen (21) und ein Befestigungssystem des Typs der Bajonettbefestigung aufweist, das geneigte radiale Flügel (22) aufweist, um in einem Loch mit Ohren befestigt zu werden, das in dem Querträger (3) ausgebildet ist, derart, dass sich durch eine radiale Drehung der Stütze (7) von der ersten Winkelposition in Richtung einer zweiten Winkelposition die flexiblen Laschen (21) wieder in einer vorgeschobenen Position in dem Loch mit Ohren befinden und sich die geneigten radialen Flügel (22) wieder in Kontakt mit der unteren Seite des Querträgers (3) befinden, derart, um die Stütze (7) jeweils in Drehung und in Axialverschiebung gegenüber dem Querträger (3) zu verriegeln, und dadurch, dass die geneigten Flügel (22) gleichzeitig beim Verriegeln in Drehung und Verschiebung eine axiale Erhöhung der Stange (9) in der Stütze (7) derart bewirken, damit sich die Stange (9) in der zweiten Winkelposition in der Stütze (7) zwischen dem Querträger (3) und dem Befestigungspunkt des Heizkörpers (1) selbstjustiert erstreckt.

2. Befestigungsvorrichtung (6, 6') nach Anspruch 1, **dadurch gekennzeichnet, dass** die Stütze (7) Greifmittel (17) aufweist, die zur Drehbewegung der Stütze (7) dienen.

3. Befestigungsvorrichtung (6, 6') nach einem der vorhergehenden Ansprüche, **dadurch gekennzeichnet, dass** der Fuß (11) des Schiebers (8) die Form eines Schuhs aufweist.

4. Befestigungsvorrichtung (6, 6') nach einem der vorhergehenden Ansprüche, **dadurch gekennzeichnet, dass** die Stange (9) des Schiebers (8) einen schmelzbaren Abschnitt (28) in der Nähe des Fußes (11) des Schiebers (8) aufweist.

5. Befestigungsvorrichtung (6, 6') nach einem der vorhergehenden Ansprüche, **dadurch gekennzeichnet, dass** die Stütze (7) Verriegelungsmittel an dem Querträger (3) aufweist.

6. Befestigungsvorrichtung (6, 6') nach Anspruch 5, **dadurch gekennzeichnet, dass** die Verriegelungsmittel der Stütze (7) an dem Querträger (3) durch eine Drehbewegung der Stütze (7) betätigbar sind.

7. Befestigungsvorrichtung (6, 6') nach Anspruch 5 oder 6, **dadurch gekennzeichnet, dass** die Verriegelungsmittel der Stütze (7) an dem Querträger (3) durch eine Drehbewegung des Typs 1/4 Drehung der Stütze (7) gegenüber dem Schieber (8) betätigbar sind.

8. Befestigungsvorrichtung (6, 6') nach einem der vorhergehenden Ansprüche, **dadurch gekennzeichnet, dass** sie ein System zur Blockierung in axialer Verschiebung des Schiebers (8) in Vormontageposition in der Stütze (7) aufweist, wenn sich die Stütze (7) in der ersten Winkelposition befindet.

9. Befestigungsvorrichtung (6) nach Anspruch 8, **dadurch gekennzeichnet, dass** das System zur Blockierung in axialer Verschiebung des Schiebers (8) in Vormontageposition in der Stütze (7) eine einziehbare Lasche (29) ist, die radial unter dem Kopf (10) des Schiebers (8) ausgebildet ist und die auf einem Rand der Stütze (7) blockiert wird, dadurch, dass die Vormontageposition eine kompakte Position mit dem Schieber (8) ist, der maximal in die Stütze (7) eingetrieben ist, und dadurch, dass das Einstellen des Verschiebens des Fußes (11) der Stange (9) bis zu dem Befestigungspunkt erfolgt, indem der Kopf (10) der Stange (9) in die Stütze (7) geschoben wird.

10. Befestigungsvorrichtung (6') nach Anspruch 8, **dadurch gekennzeichnet, dass** das System zur Blockierung in axialer Verschiebung des Schiebers (8) in Vormontageposition in der Stütze (7) ein Federclip (129) ist, der auf dem Kopf (115) der Stütze (7) ausgebildet ist, dadurch, dass die Vormontageposition eine ausgefahrene Position mit dem Schieber (8) ist, der maximal aus der Stütze (7) ausgetreten ist, und dadurch, dass das Einstellen des Verschiebens des Fußes (11) der Stange (9) bis zu dem Befestigungspunkt erfolgt, indem auf den Federclip (129) gedrückt wird, um ein Eintreiben der Stange (9) in die Stütze (7) zu ermöglichen.

11. Befestigungsvorrichtung (6, 6') nach einem der vorhergehenden Ansprüche, **dadurch gekennzeichnet, dass** der Schieber (8) und die Stütze (7) aus Kunststoff sind.

## Claims

1. A fixing device (6, 6') of a radiator (1) of a motor vehicle on a cross member (3) of the vehicle, comprising a slider (8) in form of rod (9) with a head (10) and a foot (11), and a support (7) forming a base (14) intended to be fixed to said cross member (3), said support (7) having an annular bore (18) wherein said slider (8) in form of rod (9) can be axially depressed in front of a mounting point for said foot (11) of said rod (9) which is provided in said radiator (1), **characterized in that** said rod (9) has along its length at least one area of striations which form notches (12) and at least one non-striated area comprising a flexible finger (13) so as to face at least a corrugated longitudinal strip (19) forming notches on an inner face of said bore (18) of said support (7), said inner face of said bore (18) of said support (7) further comprising at least one smooth longitudinal strip which extends axially and adjacent to at least said corrugated longitudinal strip (19), such that in a first angular position of said support (7) relative to said rod (9), said rod (9) can be axially depressed with notch into said bore (18) of said support (7) when said finger (13) passes successively from one striation to another of said corrugated longitudinal strip (19) to move said foot (11) of said rod (9) up to said mounting point in said radiator (1) where said foot (11) is locked axially and rotationally, and **in that** said support (7) comprises flexible lugs (21) and a attachment system of the bayonet type comprising radial fins (22) inclined so as to be fixed in a hole in ears formed in said cross member (3), such that by an axial rotation of said support (7) from said first angular position to a second angular position, said flexible lugs (21) are in an advanced position in said hole in ears, and said inclined radial fins (22) are in contact with the lower face of said cross member (3) so as to lock respectively in rotation and in axial translation said support (7) relative to said cross member (3) and **in that** said inclined fins (22) simultaneously cause during said locking in rotation and in translation, an axial raising of said rod (9) in said support (7) so that in said second angular position said rod (9) extends in a self-adjusted manner in said support(7) between said cross member (3) and said mounting point of said radiator (1).

2. A fixing device (6, 6') according to claim 1, **characterized in that** said support (7) comprises gripping means (17) for the rotational movement of said support (7).

3. A fixing device (6, 6') according to one of the preceding claims, **characterized in that** said foot (11) of slider (8) has the shape of a clog.

4. A fixing device (6, 6') according to one of the preceding claims, **characterized in that** said rod (9) of said slider (8) comprises a fusible section (28) proximate said foot (11) of said slider (8).

5. A fixing device (6, 6') according to one of the preceding claims, **characterized in that** said support (7) comprises locking means to said cross member (3).

6. A fixing device (6, 6') according to claim 5, **characterized in that** said locking means for locking said support (7) to said cross member (3) can be actuated by a rotational movement of said support (7).

7. A fixing device (6, 6') according to one of claims 5 or 6, **characterized in that** said locking means of said support (7) to said cross member (3) can be actuated by a rotational movement of 1 / 4 turn type of said support (7) relative to said slider (8).

8. A fixing device (6, 6') according to one of the preceding claims, **characterized in that** it comprises a locking system in axial translation of said slider (8) in a pre-mounting position in said support (7) when said support (7) is in said first angular position.

9. A fixing device (6) according to claim 8, **characterized in that** said locking system in axial translation of said slider (8), in pre-mounting position in said support (7) is a radially retractable lug (29) arranged under said head (10) of said slider (8) and that locks onto a rim of said support (7), **in that** the pre-mounting position is a compact position with said slider (8) fully depressed in said support (7) and **in that** the adjusting movement of said foot (11) of said rod (9) to the mounting-point is done by pushing said head (10) of said rod (9) in said support (7).

10. A fixing device (6') according to claim 8, **characterized in that** said locking system in axial translation of said slider (8) in a pre-mounting position in said support (7) is a spring clip (129) arranged on said head (115) of said support (7), **in that** the pre-mounting position is a deployed position with said slider (8) extended to the maximum from said support (7) and **in that** the adjusting movement of said foot (11) of said rod (9) to the mounting-point is done by pressing said spring clip (129) to allow a depression of said rod (9) in said support (7).

11. A fixing device (6, 6') according to one of the preceding claims, **characterized in that** said slider (8) and said support (7) are made of plastic.
